# EUROPEAN PATENT APPLICATION

(11) **EP 4 636 743 A1**
(43) Date of publication of application: **22.10.2025**
(21) Application number: 23957155.7
(22) Date of filing: 31.10.2023
(51) Int. Cl.: G09G 3/20, G06F 13/00, H04J 3/06

(54) **INTERFACE CIRCUIT, DATA TRANSMISSION METHOD, DISPLAY PANEL, AND DISPLAY DEVICE**

(71) Applicant: Beijing Shiyan Technology Co., Ltd., Beijing 100176 (CN)
(72) Inventor: YANG, Jie, Beijing 100176 (CN); ZHANG, Lianghao, Beijing 100176 (CN); SUN, Wei, Beijing 100176 (CN); YU, Shuhuan, Beijing 100176 (CN); DUAN, Xin, Beijing 100176 (CN); LIU, Rui, Beijing 100176 (CN); ZONG, Shaolei, Beijing 100176 (CN)
(74) Representative: Cohausz & Florack
(86) International application number: PCT/CN2023/128690
(87) International publication number: WO 2025/091278

(57) **Abstract**

An interface circuit, a data transmission method, a display panel and a display apparatus are provided, belonging to the field of interface technology, and can solve the problem of asynchronous data transmission by port physical layers. The data transmission method includes parsing, by each port physical layer in a data transmission module, a received first input signal to obtain input data, a clock signal and a lock signal corresponding to the port physical layer; generating, by a control module, a control signal according to a second input signal, the second input signal being related to lock signals of port physical layers; and synchronously transmitting, by data synchronization units in a data synchronization module, the corresponding input data based on the control signal in response to each of lock signals corresponding to all port physical layers being at an operating level. The present disclosure realizes data synchronization in the data transmission by the port physical layers.

## Description

### TECHNICAL FIELD

The present disclosure relates to the field of interface technology, and in particular to an interface circuit, a data transmission method, a display panel and a display apparatus.

### BACKGROUND

A current Point to Point (P2P) high speed communication receiving terminal interface generally transmits signals by a 2Lane way (through two lanes). However, a data volume by the 2Lane way cannot meet requirements of an ultra-high definition display driving chip, and therefore, it is necessary to develop a P2P high speed interface with multiple lanes. At present, an interface with multiple lanes or two lanes is realized by using the same port physical layer (PHY), and the port physical layer PHY corresponds to one clock signal and one lock signal, so that the multiple lanes or two lanes share one clock signal, and only a lock process needs to be performed on the clock signal once, thereby ensuring that the synchronization is not required among different lanes. However, in view of the high cost of the design and the improvement for the port physical layer PHY, it is not flexible to integrate too many lanes into one PHY module, which is not conducive to expansion. An interface IP is adopted in the related art in which each port physical layer PHY only has one lane, and a plurality of port physical layers PHY are combined together to include a plurality of lanes. Each port physical layer PHY corresponds to one clock and one lock signal, so that a situation occurs that data through different lanes corresponding to different port physical layers PHY are asynchronous and locking of the lanes is asynchronous due to different clock signals of the lanes.

### SUMMARY

The present disclosure is directed to solving at least one of the technical problems in the related art, and provides an interface circuit, a data transmission method, a display panel and a display apparatus for data synchronization.

In a first aspect, the technical solution adopted to solve the technical problems of the disclosure is an interface circuit for an integrated circuit, including: a data transmission module including a plurality of port physical layers; wherein each port physical layer is configured to parse a first input signal from a first input terminal to obtain input data to a data output terminal and a clock signal to a clock signal terminal, each port physical layer further includes a lock signal terminal configured to output a lock signal, and the lock signal at the lock signal terminal of the port physical layer is changed from a non-operating level to an operating level in response to the lock signal at the lock signal terminal detecting that the clock signal is in a locked state; a control module configured to obtain a control signal at a second output terminal of the control module according to a second input signal input by a second input terminal of the control module; wherein the second input signal is related to a plurality of lock signals at a plurality of lock signal terminals of the plurality of port physical layers; and a data synchronization module including a plurality of data synchronization units in one-to-one correspondence with the plurality of port physical layers, wherein each data synchronization unit corresponds to one control signal terminal, a third input terminal of each data synchronization unit is configured to receive the input data of the port physical layer corresponding to the data synchronization unit, an eighth input terminal of the data synchronization unit is configured to receive the lock signal, a control signal terminal of the data synchronization unit is configured to receive the control signal, and a fourth input terminal of the data synchronization unit is configured to receive the clock signal of the port physical layer corresponding to the data synchronization unit or a reset signal; the plurality of data synchronization units are configured to synchronously transmit the corresponding input data based on the control signal in response to the plurality of lock signals corresponding to all the port physical layers being at the operating level.

In some embodiments, the second input signal includes the plurality of lock signals of the plurality of port physical layers, the control signal is the reset signal, and the reset signal output by the second output terminal of the control module is at an operating level in response to the plurality of lock signals being at the operating level.

In some embodiments, the control module is an AND gate.

In some embodiments, the control module includes a determining unit and a plurality of first control units in one-to-one correspondence with the plurality of port physical layers, the control signal includes a plurality of first control signals in one-to-one correspondence with the plurality of first control units, and the plurality of first control signals are write clock signals of the plurality of data synchronization units; and each first control unit includes a fifth input terminal configured to receive an external clock signal and a sixth input terminal configured to receive the clock signal output by the port physical layer corresponding to the sixth input terminal; wherein the determining unit is configured to determine whether the plurality of clock signals corresponding to the plurality of port physical layers are in an unlocked state according to the second input signal; and each first control unit is configured to select the external clock received from the fifth input terminal from the external clock signal and any one of all the plurality of clock signals received from the sixth input terminal as a write clock signal in response to the clock signal being in the unlocked state.

In some embodiments, the control module further includes a plurality of second control units in one-to-one correspondence with the plurality of port physical layers, the control signal further includes a plurality of second control signals in one-to-one correspondence with the plurality of second control units, and the plurality of second control signals are read clock signals; and each second control unit includes a ninth input terminal configured to receive an external read clock signal and a tenth input terminal configured to receive any one of the plurality of read clock signals corresponding to the plurality of port physical layers; and each second control unit is configured to select the external read clock signal received from the ninth input terminal from the external read clock signal and any one of the plurality of clock signals received from the tenth input terminal as a read clock signal in response to any one of all the plurality of clock signals being in the unlocked state.

In some embodiments, the plurality of first control units and the plurality of second control units are selectors.

In some embodiments, each port physical layer further includes a reconfiguration signal terminal, the interface circuit further includes a reconfiguration module, a seventh input terminal of the reconfiguration module is connected to the second output terminal of the control module, and a third output terminal of the reconfiguration module is connected to the reconfiguration signal terminals of all the plurality of port physical layers.

In some embodiments, for a plurality of integrated circuits cascaded, each integrated circuit corresponds to one control signal, the interface circuit further includes a lock control module, a first terminal of the lock control module is connected to the plurality of integrated circuits and configured to receive the control signal corresponding to each integrated circuit, a second terminal of the lock control module is connected to the seventh input terminal of the reconfiguration module and configured to transmit the control signal corresponding to each integrated circuit to the reconfiguration module, and the third output terminal of the reconfiguration module is connected to a third terminal of the lock control module, which is configured to receive the reconfiguration signal output by the reconfiguration module and transmit the reconfiguration signal to each integrated circuit through the first terminal of the lock control module.

In some embodiments, the first input signal received by the first input terminal of each port physical layer is an input signal through one lane.

In some embodiments, the first input signal received by the first input terminal of each port physical layer includes input signals through multiple lanes.

In some embodiments, the interface circuit further includes a parsing module connected to the data synchronization module and including a plurality of parsing units in one-to-one correspondence with the plurality of port physical layers, and each data synchronization unit corresponds to one parsing unit, which is configured to receive and parse the input data transmitted by the data synchronization unit.

In a second aspect, an embodiment of the present disclosure further provides a data transmission method applied to the interface circuit in any one of the embodiments of the first aspect, including: parsing, by each port physical layer in the data transmission module, a received first input signal to obtain input data, the clock signal and the lock signal corresponding to the port physical layer; generating, by the control module, the control signal according to the second input signal, wherein the second input signal is related to the plurality of lock signals of the plurality of port physical layers; and synchronously transmitting, by the plurality of data synchronization units in the data synchronization module, the input data corresponding to the plurality of data synchronization units based on the control signal in response to the plurality of lock signals corresponding to all the plurality of port physical layers being at an operating level.

In some embodiments, the control module is an AND gate, and the generating, by the control module, the control signal according to the second input signal includes: receiving the plurality of lock signals corresponding to the plurality of port physical layers, and generating, by the AND gate, the control signal.

In some embodiments, the synchronously transmitting, by the plurality of data synchronization units in the data synchronization module, the input data corresponding to the plurality of data synchronization units based on the control signal in response to the plurality of lock signals corresponding to all the plurality of port physical layers being at an operating level, includes: taking the control signal as a reset signal of the plurality of data synchronization units of the data synchronization module; and synchronously transmitting, by the plurality of data synchronization units, the input data corresponding to the plurality of data synchronization units based on the reset signal in response to the plurality of lock signals corresponding to all the port physical layers being at the operating level.

In some embodiments, the method further includes: reconfiguring the plurality of port physical layers based on the control signal.

In some embodiments, the control signal includes a write clock signal, and the generating, by the control module, the control signal according to the second input signal, includes: determining, by the control module, whether the plurality of clock signals corresponding to the plurality of port physical layers are in an unlocked state or not according to the second input signal; and selecting, by the control module, an external clock signal from the external clock signal and any one of all the plurality of clock signals as the write clock signal in response to the clock signal being in the unlocked state.

In some embodiments, the control signal further includes a read clock signal, and the generating, by the control module, the control signal according to the second input signal, includes: selecting an external read clock signal from the external read clock signal and any one of all the plurality of clock signals as the read clock signal in response to the clock signal being in the unlocked state.

In a third aspect, an embodiment of the present disclosure further provides a display panel, including the interface circuit in any one of the embodiments of the first aspect.

In a fourth aspect, the present disclosure further provides a display apparatus, including the display panel provided in the third aspect.

### BRIEF DESCRIPTION OF DRAWINGS

FIG. 1 is a schematic diagram of an interface circuit in the related art;
FIG. 2 is a schematic diagram of another interface circuit in the related art;
FIG. 3 is a schematic diagram of an interface circuit according to an embodiment of the present disclosure;
FIG. 4 is a partial schematic diagram of an interface circuit according to an embodiment of the present disclosure;
FIG. 5 is a schematic diagram of a control module according to an embodiment of the present disclosure;
FIG. 6 is a partial schematic diagram of an interface circuit according to an embodiment of the present disclosure;
FIG. 7 is a schematic diagram of another interface circuit according to an embodiment of the present disclosure;
FIG. 8 is a schematic diagram of another interface circuit according to an embodiment of the present disclosure;
FIGS. 9a to 9b are schematic diagrams of an interface circuit having a dual-lock architecture according to an embodiment of the present disclosure; and
FIG. 10 is a schematic diagram of another interface circuit according to an embodiment of the present disclosure.

### DETAIL DESCRIPTION OF EMBODIMENTS

In order to enable one of ordinary skill in the art to better understand the technical solutions of the present disclosure, the present disclosure will be described in further detail with reference to the accompanying drawings and the detailed description.

Unless defined otherwise, technical or scientific terms used herein shall have the ordinary meaning as understood by one of ordinary skill in the art to which the present disclosure belongs. The terms "first", "second", and the like used in the present disclosure are not intended to indicate any order, quantity, or importance, but rather are used for distinguishing one element from another. Further, the term "a", "an", "the", or the like used herein does not denote a limitation of quantity, but rather denotes the presence of at least one element. The term "comprising", "including", or the like, means that the element or item preceding the term contains the element or item listed after the term and its equivalent, but does not exclude other elements or items. The term "connected", "coupled", or the like is not limited to physical or mechanical connections, but may include electrical connections, whether direct or indirect connections. The terms "upper", "lower", "left", "right", and the like are used only for indicating relative positional relationships, and when the absolute position of an object being described is changed, the relative positional relationships may also be changed accordingly.

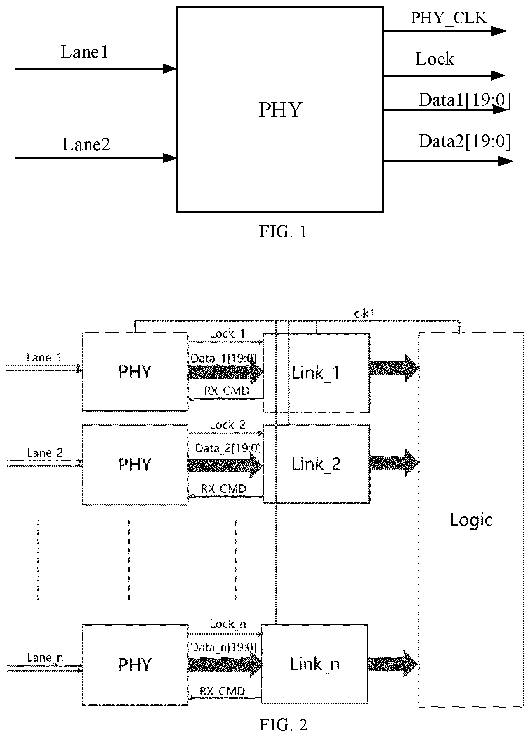

FIG. 1 is a schematic diagram of an interface circuit in the related art. The interface circuit is illustrated by taking one port physical layer PHY transmitting 2Lane signals (transmitting a signal through two lanes) as an example. As shown in FIG. 1, the interface circuit includes two input terminals, which respectively receive a Lane1 signal and a Lane2 signal transmitted by a data transmitting terminal, and the input signals through the two lanes are parsed by the port physical layer PHY to obtain corresponding Data1[19:0] data, Data2[19:0] data and a PHY_CLK signal together with a generated lock signal. When the port physical layer PHY transmits the data, the Data1[19:0] data and the Data2[19:0] data are transmitted according to the PHY_CLK signal when the lock signal is at an operating level. The Data1[19:0] data and the Data2[19:0] data respond to the same PHY_CLK signal and the same lock signal, so that the Data1[19:0] data and the Data2[19:0] data are transmitted simultaneously while the problem of asynchronous transmission is avoided. However, in order to meet the requirements of the ultra-high definition display driving chip, an interface circuit with more lanes needs to be developed, and accordingly each port physical layer PHY needs to integrate more lanes for transmitting signals (transmitting multiple-Lane signals). However, when a great number of signals are transmitted through more lanes integrated into each port physical layer PHY, the port physical layer PHY is not flexible to transmit the signals, which is not conducive to expansion.

In view of the above problems, another interface circuit has been proposed in the related art. FIG. 2 is a schematic diagram of another interface circuit in the related art. In order to achieve better integration and flexibility, the interface circuit adopts an architecture in which 1PHY corresponds to a 1Lane signal (each port physical layer PHY corresponds to a signal through one lane), and such the circuit architecture may be obtained by splicing a plurality of lanes according to the requirement of data volume. As shown in FIG. 2, the architecture includes n port physical layers PHY, including PHY_1, PHY_2, and, ..., PHY_n, each port physical layer PHY corresponds to a 1Lane signal, and therefore, the architecture includes n input signals Lane_1, Lane_2, and ,..., Lane_n, respectively. Each port physical layer PHY obtains a PHY_CLK signal (not shown), a lock signal, and input data Data corresponding to the input signal, and transmits its input data Data according to its PHY_CLK signal and its lock signal. A recovery time of the PHY_CLK signal of each port physical layer PHY is not fixed (i.e., the time when the clock is locked is not fixed), so that the time when the port physical layer PHY transmits data is different. Meanwhile, each port physical layer PHY further corresponds to a link circuit configured to parse the received input data Data for subsequent use. Although each port physical layer PHY corresponds to a PHY_CLK signal, all link circuits share the same clock signal. In FIG. 2, as an example, each link circuit uses a clock signal clk1 (a clock signal PHY_CLK corresponding to the port physical layer PHY1). The link circuit corresponding to a signal through each lane uses the clock signal PHY_CLK (clk1) for the input signal Lane_1 so that a clock domain crossing phenomenon occurs. In conclusion, the two factors result in the asynchronous data and the abnormal display picture.

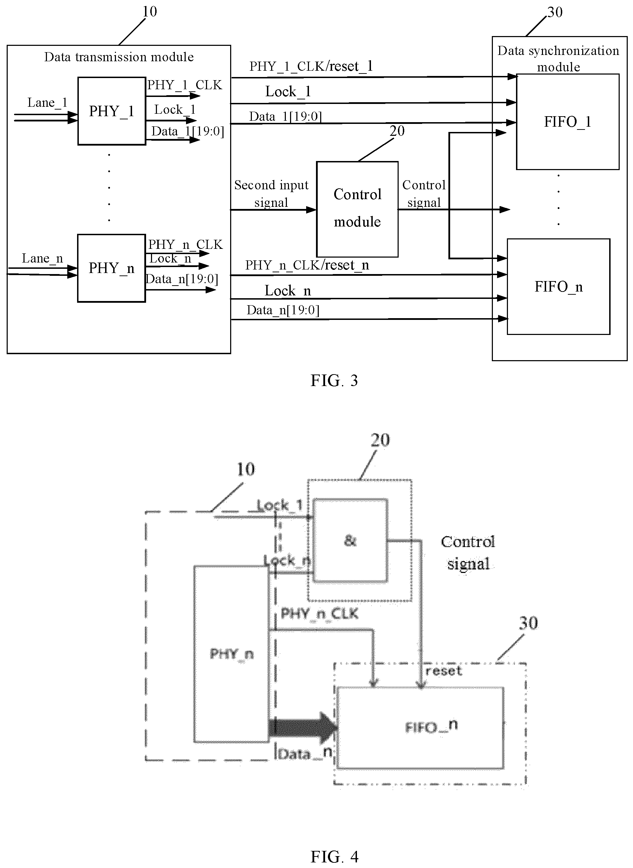

In view of the above problems in the related art, an embodiment of the present disclosure provides an interface circuit. FIG. 3 is a schematic diagram of an interface circuit according to an embodiment of the present disclosure. As shown in FIG. 3, the interface circuit is applied to an integrated circuit, and includes: a data transmission module 10, a control module 20 and a data synchronization module 30. The data transmission module 10 includes a plurality of port physical layers PHY (PHY_1, ..., PHY_n). Each port physical layer PHY parses a first input signal from a first input terminal to obtain input data to a data output terminal and a clock signal PHY_CLK to a clock signal terminal. Each port physical layer PHY further includes a lock signal terminal configured to output a lock signal Lock. When the lock signal Lock at the lock signal terminal of the port physical layer PHY detects that the clock signal PHY_CLK at the clock signal terminal is in a locked state, the lock signal Lock at the lock signal terminal is changed from a non-operating level to an operating level.

The control module 20 is configured to obtain a control signal at a second output terminal of the control module 20 according to a second input signal input by a second input terminal of the control module 20. The second input signal is related to a plurality of lock signals Lock at a plurality of lock signal terminals of the plurality of port physical layers PHY.

The data synchronization module 30 includes a plurality of data synchronization units FIFO (FIFO_1, ..., FIFO_n) in one-to-one correspondence with the plurality of port physical layers PHY, and each data synchronization unit FIFO corresponds to one control signal terminal. A third input terminal of each data synchronization unit FIFO receives the input data Data of the port physical layer PHY corresponding to the data synchronization unit FIFO, an eighth input terminal of the data synchronization unit FIFO receives the lock signal Lock, a control signal terminal of the data synchronization unit FIFO receives a control signal, and a fourth input terminal of the data synchronization unit FIFO receives the clock signal PHY_CLK of the port physical layer PHY corresponding to the data synchronization unit FIFO or a reset signal reset of the data synchronization unit FIFO based on the control signal. When the lock signals Lock corresponding to all the port physical layers PHY are at the operating level, the plurality of data synchronization units FIFO (FIFO _1, ..., FIFO_n) synchronously transmit the corresponding input data Data based on the control signal.

In particular, the data transmission module 10 is configured to receive input data from a data transmitting terminal and transmit the input data to a data receiving terminal. The port physical layer (PHY) is a common abbreviation for a physical layer of an OSI (Open System Interconnect Reference Model) model, and is a chip. In terms of hardware, a PHY chip is generally an analog-to-digital hybrid circuit, and is responsible for receiving analog signals such as electrical signals and optical signals, and transmitting the signals, which are subjected to demodulation and A/D (Analog to Digital) conversion processes, to an MAC (Media Access Control) chip for processing through an MII (Medium Independent Interface) interface. Each port physical layer PHY parses the corresponding input data Data and a clock signal PHY_CLK with a generated lock signal Lock according to the received first input signal. That is, the port physical layers PHY are in one-to-one correspondence with the clock signals PHY_CLK and the lock signals Lock. As shown in FIG. 3, the data transmission module 10 includes the port physical layer PHY_1 and the corresponding PHY_1_CLK, Lock_1, and Data_1; ...; and the port physical layer PHY_n and the corresponding PHY_n_CLK, Lock_n, Data_n. Each clock signal PHY_CLK is a clock signal of the port physical layer PHY, and is changed periodically all the time, and a circuit only collects signals or data when a rising edge of the clock signal is triggered. Each lock signal Lock is a state signal, which represents the state of the PHY_CLK signal. The lock signal Lock is in an operating state, which indicates that the corresponding clock signal PHY_CLK is in a locked state, and the normal data transmission may be performed at this time. Conversely, the lock signal Lock is in a non-operating state, which indicates that the corresponding clock signal PHY_CLK is in an unlocked state, and the data transmission is not possible. Generally, before the port physical layer PHY transmits the input data, the transmitting terminal transmits a clk training signal to the port physical layer PHY, and the port physical layer PHY starts to lock the PHY_CLK signal after receiving the clk training signal, and after about 15 microseconds, the clock signal PHY_CLK is in a locked state, that is, the lock signal Lock is changed from a non-operating level to an operating level. The operating level of the lock signal Lock may be a high level or a low level, which is not limited in the present disclosure. In some embodiments, the first input signal is a differential signal.

The data synchronization module 30 is configured to synchronously transmit the input data of the port physical layers PHY based on the control signal. Specifically, the data synchronization module 30 receives the input data Data, the clock signal PHY_CLK, and the lock signal Lock transmitted by the data transmission module 10, and transmits the input data Data according to the clock signal PHY_CLK and the lock signal Lock. The data synchronization module 30 includes a plurality of data synchronization units FIFO in one-to-one correspondence with the port physical layers PHY. The data synchronization unit FIFO_1 receives Data_1, PHY_1_CLK and Lock_1 transmitted by the port physical layer PHY_1; ...; and the data synchronization unit FIFO_n receives Data_n, PHY_n_CLK, and Lock_n transmitted by the port physical layer PHY_n. In addition, each data synchronization unit FIFO further receives a reset signal reset, and only when the reset signal reset is in an operating state, the data synchronization unit FIFO starts to operate. Typically, the reset signal reset is in the operating state by default after power-up. In the related art, the reset signal reset of each data synchronization unit FIFO is in the operating state by default after power-up, the port physical layers PHY directly transmit the respective clock signals PHY_CLK and the respective lock signals Lock to the data synchronization module 30, respectively, and the port physical layers PHY are in one-to-one correspondence with the clock signals PHY_CLK and the lock signals Lock, so that when the port physical layers PHY transmit the data according to the respective clock signals PHY_CLK and the respective lock signals Lock, the port physical layers PHY do not interfere with each other, but the data transmission for the port physical layers PHY may be asynchronous, and further, a display picture of a display panel is abnormal.

The inventors have found that in practice, the signals of the data synchronization unit FIFO for controlling the transmission of the input data Data include the reset signal reset and a clock of the data synchronization unit FIFO. For the reset signal reset, the data synchronization unit FIFO starts to operate only when the reset signal reset is in the operating state, and the transmission of the input data Data by the data synchronization unit FIFO may be controlled by controlling the reset signal reset. For the clock of the data synchronization unit FIFO, a circuit collects signals or data only when a rising edge of the clock is triggered, that is, the input data Data is transmitted according to a frequency of the clock of the data synchronization unit FIFO, so that the transmission of the input data Data by the data synchronization unit FIFO may be controlled by controlling the clock of the data synchronization unit FIFO. Further, the clock of the data synchronization unit FIFO is typically related to the clock signal PHY_CLK of the port physical layer PHY, and a write clock of the data synchronization unit FIFO is typically the clock signal PHY_CLK of the port physical layer PHY. In summary, the time of the data transmission of each port physical layer PHY can be controlled by controlling the clock signal PHY_CLK of each port physical layer PHY or the reset signal reset of the data synchronization unit FIFO, so as to achieve the synchronous data transmission of the port physical layers PHY.

The lock signal Lock is a state signal, and indicates whether the clock signal PHY_CLK is in a locked state, and the data may be normally transmitted by using the clock signal PHY_CLK only when the lock signal Lock is in an operating state. Therefore, in the embodiment of the present disclosure, an operating state of each port physical layer PHY may be determined according to the second input signal related to the plurality of lock signals Lock at the plurality of lock signal terminals of the plurality of port physical layers PHY. Meanwhile, the control signal is generated according to the second input signal related to the plurality of lock signals Lock at the plurality of lock signal terminals of the plurality of port physical layers PHY, and the data transmission of each data synchronization unit FIFO is controlled according to the control signal, so as to ensure the synchronous data transmission of the port physical layers PHY.

In the embodiment of the present disclosure, the control module 20 processes the second input signal related to the plurality of lock signals Lock at the plurality of lock signal terminals of the plurality of port physical layers PHY to obtain the control signal, and then transmits the control signal to the plurality of data synchronization units FIFO corresponding to the data synchronization module 30, respectively. The second input signal related to the plurality of lock signals Lock at the plurality of lock signal terminals of the plurality of port physical layers PHY may be the lock signal itself, or may be a signal for controlling the lock signal or another signal related to the lock signal, such as the clock signal PHY_CLK, which is not limited in the present disclosure. The control signal may be used as the clock signal of the data synchronization unit FIFO to control the transmission of the input data by each data synchronization unit FIFO, and may be used as the reset signal reset to control the time when each data synchronization unit FIFO starts to operate, thereby controlling the time when each data synchronization unit FIFO transmits the input data. The control signal is changed to an operating state only when each data synchronization unit FIFO is in a state of being capable of transmitting data (the lock signal Lock is at an operating level), and the data synchronization units FIFO may control all the port physical layers PHY to synchronously transmit the input data according to the control signal. Meanwhile, one of the PHY_CLK signal and the reset signal, which is not transmitted to the data synchronization unit FIFO as the control signal, is directly received by the fourth input terminal of the data synchronization unit FIFO as the clock signal or the reset signal reset of the data synchronization unit FIFO. In this way, the data synchronization units FIFO can maintain the synchronous data transmission through the reset signal reset or the clock. When the lock signals Lock corresponding to all the port physical layers PHY are at an operating level, the plurality of data synchronization units FIFO synchronously transmit the corresponding input data.

It should be noted that each data synchronization unit FIFO corresponds to one data control terminal, and each data control terminal receives one data control signal.

In the embodiment of the present disclosure, for the second input signal related to the plurality of lock signals Lock at the plurality of lock signal terminals of the plurality of port physical layers PHY, the second input signal may reflect a current state of the transmission of the input data by each port physical layer, for example, whether each port physical layer PHY can currently transmit the data. The control module 30 generates the control signal according to the second input signal, and transmits the control signal to the data synchronization units FIFO of the data synchronization module 30, so that the data synchronization units FIFO may be controlled through the control signal according to the current state of the data transmission by the port physical layers PHY to transmit the corresponding input data, and the data synchronization units FIFO may transmit the corresponding input data synchronously. Specifically, the control signal is changed to the operating state only when each data synchronization unit FIFO is in a state of being capable of transmitting the data, to control each data synchronization unit FIFO to transmit the data. In this way, each data synchronization unit FIFO transmits the input data Data according to the received control signal, which can ensure that the data synchronization units FIFO corresponding to the port physical layers PHY transmits the respective input data Data synchronously.

In some embodiments, the second input signal includes the plurality of lock signals Lock of the plurality of port physical layers PHY, the control signal is the reset signal reset, and the reset signal reset output by the second output terminal of the control module 20 is at the operating level in response to the plurality of lock signals Lock at an operating level.

In particular, in the embodiment of the present disclosure, the reset signal reset is generated according to all the lock signals Lock corresponding to all the port physical layers PHY. The reset signal reset is in an operating state only when the lock signal Lock of each port physical layer PHY is in an operating state. That is, only when each data synchronization unit FIFO is in a state of being capable of transmitting the data, the reset signal rest is in the operating state, to control each data synchronization unit FIFO to start to operate. At this time, the clocks of the data synchronization units FIFO are the same, which cannot cause different clocks, and can ensure the synchronous data transmission of the data synchronization units FIFO. At this time, the fourth input terminals of the data synchronization units FIFO receive the clock signals PHY_CLK of the port physical layers PHY corresponding to the data synchronization units FIFO, respectively.

It should be noted that the control signal terminal corresponding to each data synchronization unit FIFO receives the reset signal reset, so as to ensure that the data synchronization units FIFO are reset at the same time, and start to operate at the same time.

In the embodiment of the present disclosure, the time when the data synchronization units FIFO start to operate is controlled by controlling the reset signals reset of the data synchronization units FIFO, which ensures that the data synchronization units FIFO can transmit the data when starting to operate, thereby realizing the synchronous transmission of the input data by the port physical layers PHY.

In some embodiments, the control module 20 is an AND gate.

Specifically, the lock signals Lock corresponding to the port physical layers PHY are input to an input terminal of the AND gate, and the control signal is output from an output terminal of the AND gate, so that the output control signal is in an operating state when all the lock signals Lock corresponding to the port physical layers PHY are in an operating state, and the output control signal is in a non-operating state when any one of the lock signals Lock corresponding to the port physical layers PHY is in a non-operating state. The control signal output by the AND gate with the lock signals Lock corresponding to all the port physical layers PHY is used as the reset signals reset of the data synchronization units FIFO to control reset functions of the data synchronization units FIFO, so that the data synchronization units FIFO start to operate while the lock signals Lock of all the port physical layers PHY are in the operating state, and the synchronization of data transmission is ensured.

In some embodiments, the control module 10 may be a determining unit for determining a state of the lock signal Lock corresponding to each port physical layer PHY. Alternatively, the control module 10 may be in other forms, which is not limited in the present disclosure.

FIG. 4 is a partial schematic diagram of an interface circuit according to an embodiment of the present disclosure. FIG. 4 only illustrates that one data synchronization unit FIFO in the interface circuit obtains the control signal through the control module 20, through which a port physical layer PHY corresponding to the data synchronization unit FIFO is controlled to transmit the input data. As shown in FIG. 4, the port physical layer PHY_n in the data transmission module 10 transmits the parsed input data Data_n, the clock signal PHY_n_CLK, and the lock signal Lock_n (not shown) to the data synchronization unit FIFO_n in the data synchronization module 30. Meanwhile, the control module 20 is the AND gate, the input of which is the clock signals Lock_1 ...... Lock_n corresponding to all the port physical layers PHY, and the control signal is output through the AND gate as the reset signal reset of the data synchronization unit FIFO_n in the data synchronization module 30. When all the lock signals Lock corresponding to the port physical layers PHY are at the operating level, the output control signal is at the operating level, that is, the reset signal reset of the data synchronization unit FIFO is at the operating level, and therefore the data synchronization unit FIFO starts to operate. The lock signals output by all the port physical layers PHY pass through the one AND gate and are used as the reset signal, through which the reset function of all the data synchronization units FIFO are controlled. In this way, from the functional perspective, after a lock process for all the port physical layers PHY is successful, the data synchronization units FIFO start to operate, and therefore the problem of different clocks cannot appear, and the problem of the asynchronous data transmission cannot appear.

For the interface circuit with the plurality of lanes corresponding to the plurality of port physical layers PHY, there is a problem of asynchronous transmission among the lanes, that is, the lock signals Lock of the port physical layers PHY are asynchronous. The lock process is a process during which the port physical layer PHY recovers the clock. When a training signal is transmitted from the outside, the port physical layer PHY performs a clock recovery process, and after the clock is recovered successfully, the lock signal will be changed into the operating state, but the time for the lock process of each port physical layer PHY is different, which may cause the lock signals among the different lanes to be asynchronous. For the port physical layers PHY in a normal operating state, a difference among the lock processes of different lanes is not obvious, but the difference may cause a long-time display abnormality when a certain Lane signal (a signal through a certain lane) goes wrong.

For example, when static electricity occurs outside, the clock signal PHY_CLK is disturbed by the static electricity, and therefore a normal signal cannot be recognized, the port physical layer PHY will be subjected to the lock process again (subjected to a relock process) and recover the clock again. When the interface is plugged and unplugged, and therefore the signal will be lost, the lock process is triggered again. In other unexpected situations in which a Lane (Lane_x) signal is abnormal, the port physical layer PHY corresponding to the Lane signal is unlocked, and the training signal is necessarily transmitted again: when the lock signal of Lane_x (Lock_x) is at a non-operating level, a signal transmitting terminal detects an abnormality and starts to transmit the training signal, and in a duration between 10ms and 20ms, other lanes will be subjected to the lock process again without receiving the normal data. However, the starting time when each lane is subjected to the lock process again is different, and a duration of the lock process is different, so that some lanes have been locked, but the others have not been locked. After the previously unlocked lanes have been locked, the previously locked lanes will be subjected to the lock process again without receiving the normal data for a long time (which is a mutual waiting process), which may cause that all the lanes cannot be simultaneously locked for a long time, thereby causing the abnormal display.

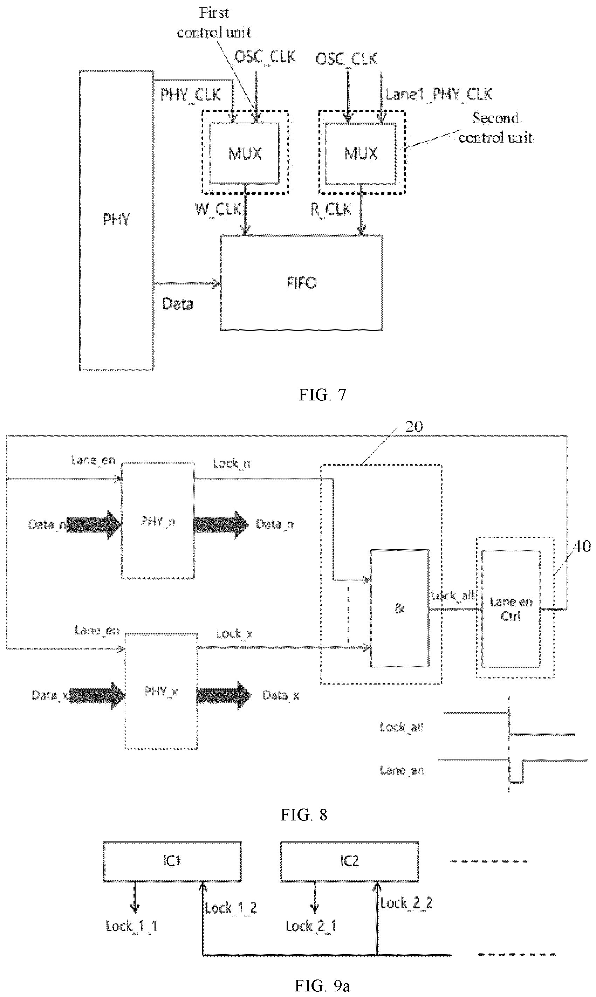

In view of the above problems, embodiments of the present disclosure provide an interface circuit. FIG. 8 is a schematic diagram of another interface circuit according to an embodiment of the present disclosure.

In some embodiments, each port physical layer PHY further includes a reconfiguration signal terminal, the interface circuit further includes a reconfiguration module (Lane en Ctrl) 40, a seventh input terminal of the reconfiguration module (Lane en Ctrl) 40 is connected to the second output terminal of the control module 20, and a third output terminal of the reconfiguration module (Lane en Ctrl) 40 is connected to the reconfiguration signal terminals of all the port physical layers PHY.

Specifically, as shown in FIG. 8, the reconfiguration module 40 uses the control signal output by the second output terminal of the control module 20 as the input signal Lock_all of the seventh input terminal, and when any one signal Lock_x is at a non-operating level, the signal Lock_all is also at a non-operating level, and a pulse Lane_en at a non-operating level is generated after the signal Lock_all passes through the Lane en Ctrl 40, and the pulse Lane_en reconfigures all the port physical layers PHY, so that all the port physical layers PHY are subjected to the lock process again at the same time. Thus, the case is avoided that the starting time when different port physical layers PHY are subjected to the lock process again are different, the mutual waiting process does not occur, and a relock process of all the lanes can be completed quickly without the abnormal display.

In the embodiment of the present disclosure, the reconfiguration module 40 reconfigures all the port physical layers PHY according to the control signal output by the control module 20, so that all the port physical layers PHY are subjected to the relock process at the same time, which can ensure that the starting time when all the port physical layers PHY are subjected to the lock process again are the same, thereby saving the time of the lock process of all the port physical layers PHY, and ensuring the normal display.

In some embodiments, when integrated circuits IC are cascaded, each integrated circuit IC corresponds to one control signal. The interface circuit further includes a lock control module (I/O Ctrl) 50, a first terminal of the lock control module 50 is connected to the integrated circuits IC and configured to receive the control signal corresponding to each integrated circuit IC, and a second terminal of the lock control module is connected to the seventh input terminal of the reconfiguration module (Lane en Ctrl) 40 and configured to transmit the control signal corresponding to each integrated circuit IC to the reconfiguration module 40. The third output terminal of the reconfiguration module 40 is connected to a third terminal of the lock control module 50, which is configured to receive the reconfiguration signal output by the reconfiguration module 40, and transmit the reconfiguration signal to each integrated circuit IC through the first terminal of the lock control module 50.

Specifically, in the case where the integrated circuits IC are used simultaneously, the plurality of lock signals Lock corresponding to the plurality of port physical layers PHY in the second input signal refer to the lock signals Lock corresponding to all the port physical layers PHY of all the integrated circuits IC. At this time, not only the lock signals Lock corresponding to the plurality of port physical layers PHY in each integrated circuit IC need to wait for each other, but also the lock signals Lock among the integrated circuits IC need to wait for each other, and the control signal output by the control module 20 is at the operating level only when all the lock signals Lock corresponding to all the port physical layers PHY of all the integrated circuits IC are in the operating state, so that the time when the lock signals Lock wait for each other is longer. The more integrated circuits IC are, and therefore, the more lanes are, the more disordered the starting time of the relock process is and the more difficult to recover the normal state is.

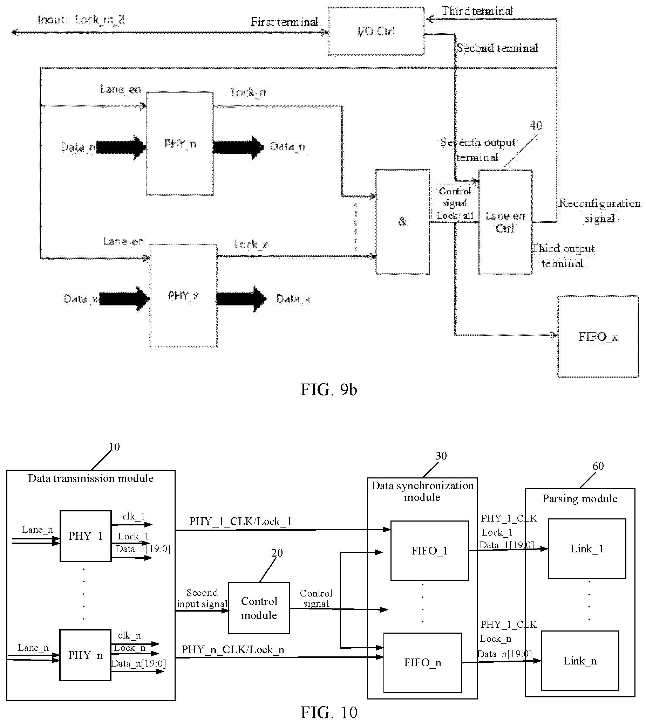

In view of the above problems, the embodiment of the present disclosure provides a dual-lock circuit architecture. FIGS. 9a to 9b are schematic diagrams of an interface circuit having a dual-lock architecture according to an embodiment of the present disclosure. In the embodiment, as an example, the control module 20 is an AND gate. FIG. 9a is a schematic diagram of cascaded integrated circuits IC according to an embodiment of the present disclosure. As shown in FIG. 9a, each of the lock signals Lock1_1 and Lock2_1 refers to a lock signal Lock that is used as a feedback signal to a data transmitting terminal (TCON (Timer Control Register), FPGA (Field-Programmable Gate Array), or the like) of a subsequent circuit or the like. Each of the lock signals Lock1_2 and Lock_2_2 refers to a reconfiguration signal output from the reconfiguration module 40 and received via the lock control module 50. All the integrated circuits IC are connected to each other by using an INOUT port.

The seventh input terminal of the reconfiguration module 40 receives control signals of the integrated circuits IC, where the control signal of each integrated circuit IC reflects a lock state corresponding to all the port physical layers PHY in the integrated circuit IC. The third output terminal of the reconfiguration module 40 outputs the reconfiguration signal to reconfigure all the integrated circuits IC. Once any integrated circuit IC needs a training process again (a retraining process), other integrated circuits IC are firstly changed into a non-operating level through the reconfiguration module (Lane en Ctrl) 40 and then changed into an operating level, and all the lanes of all the integrated circuits IC are simultaneously subjected to the retraining process, so that the mutual waiting process among the integrated circuits IC can be avoided in the retraining process.

In the embodiment of the present disclosure, when the integrated circuits IC are cascaded, the dual-lock architecture is implemented by using one lock control module 50, and a control signal of each integrated circuit IC is transmitted to the reconfiguration module 40, so that the reconfiguration module 40 reconfigures the port physical layers PHY corresponding to all the integrated circuits IC based on the lock signals of all the integrated circuits IC. The mutual waiting process among the integrated circuits IC can be avoided in the retraining process, therefore the data transmission efficiency can be improved.

With reference to the above description, in the embodiment of the present disclosure, the synchronous data transmission among the port physical layers PHY may be implemented by controlling the reset signals of the data synchronization units FIFO, and alternatively by controlling the clocks of the data synchronization units FIFO. However, the reset signals of the data synchronization units FIFO are generally consistent with those of the subsequent link circuits, and therefore, it is not generally easy to control the reset signals of the data synchronization units FIFO independently. Therefore, the asynchronous data transmission among the port physical layers PHY can be solved by controlling the clocks of the data synchronization units FIFO.

The clock of each data synchronization unit FIFO includes a write clock signal W_CLK and a read clock signal R_CLK. The write clock signal W_CLK of each data synchronization unit FIFO is derived from two signals, one being an external clock signal OSC_CLK from the outside and the other being the clock signal PHY_CLK output by the port physical layer PHY corresponding to each data synchronization unit FIFO.

When the clock signal PHY_CLK is not yet stable, the external clock signal OSC_CLK is used as the write clock signal W_CLK of the data synchronization unit FIFO. The clock signal PHY_CLK being stable means that the lock signal Lock corresponding to the clock signal PHY_CLK is in an operating state, and the clock signal PHY_CLK being unstable means that the lock signal Lock corresponding to the clock signal PHY_CLK is in a non-operating state. For example, typically at power-up, for the lock signal Lock, the clock signal PHY_CLK has not been locked before receiving the clk training signal, and at this time, the clock signal PHY_CLK is not yet stable. Alternatively, the data transmission is interrupted for some reason, the data cannot be normally transmitted, the clock signal PHY_CLK may have an error or there is no clock signal PHY_CLK, and at this time, the normal clock signal PHY_CLK needs to be restored according to the clk training signal, and the clock signal PHY_CLK is also unstable during this time. When the clock signal PHY_CLK of the port physical layer PHY corresponding to each data synchronization unit FIFO is stable, the clock signal PHY_CLK is used as the write clock signal W_CLK of each data synchronization unit FIFO. However, the signals of the port physical layers PHY are individually controlled, so that the time, when the clock signals PHY_CLK corresponding to the port physical layers PHY are stable at power-up, is asynchronous. Alternatively, the data transmission is interrupted accidentally or otherwise in any one port physical layer PHY, so that the time, when the clock signals PHY_CLK corresponding to the port physical layers PHY are stable, is asynchronous. Further, the write clock signals W_CLK for the data synchronization units FIFO transmitting the input data are asynchronous, so that the data transmission by the data synchronization units FIFO is asynchronous.

In view of the above problem of the asynchronous data transmission caused by the asynchronous write clock signals W_CLK of the data synchronization units FIFO due to the asynchronous clock signals PHY_CLK of the port physical layers PHY corresponding to the data synchronization units FIFO, the embodiment of the present disclosure provides another control module of the interface circuit.

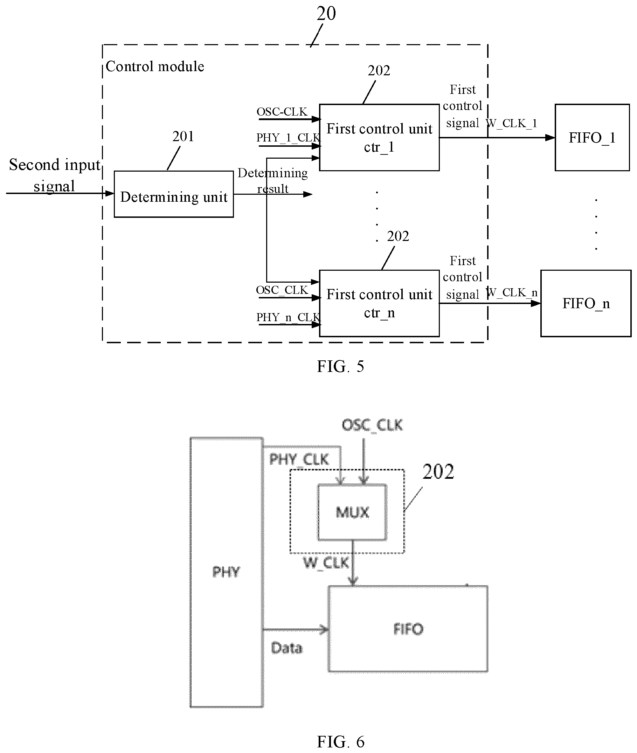

FIG. 5 is a schematic diagram of a control module according to an embodiment of the present disclosure.

In some embodiments, the control module 20 includes a determining unit 201 and a plurality of first control units 202 in one-to-one correspondence with the port physical layers PYH, the control signals include a plurality of first control signals in one-to-one correspondence with the plurality of first control units 202, and the plurality of first control signals are the write clock signals W_CLK of the data synchronization units FIFO. Each first control unit 202 includes a fifth input terminal configured to receive the external clock signal OSC_CLK and a sixth input terminal configured to receive the clock signal PHY_CLK output by the port physical layer PHY corresponding to the sixth input terminal. The determining unit 201 is configured to determine whether the plurality of clock signals PHY_CLK corresponding to the plurality of port physical layers PHY are in an unlocked state according to the second input signal. Each first control unit 202 is configured to select the external clock OSC_CLK received from the fifth input terminal from the external clock signal OSC_CLK and the clock signal PHY_CLK received from the sixth input terminal as the write clock signal W_CLK when any one of all the clock signals PHY_CLK is in an unlocked state.

Specifically, the control signal terminal of each data synchronization unit FIFO include a first control signal terminal configured to receive the write clock signal W_CLK and a second control signal terminal configured to receive the read clock signal R_CLK, the control module 20 includes the first control units 202 in one-to-one correspondence with the data synchronization units FIFO, and each first control unit 202 is configured to generate the first control signal and input the first control signal to the corresponding data synchronization unit FIFO through the first control signal terminal of the data synchronization unit FIFO as the write clock signal W_CLK of the data synchronization unit FIFO. Each first control unit 202 includes the fifth input terminal configured to receive the external clock signal OSC_CLK and the sixth input terminal configured to receive the clock signal PHY_CLK, and is configured to select one of the external clock signal OSC_CLK and the clock signal PHY_CLK as the first control signal to be transmitted to the first control signal terminal of the corresponding data synchronization unit FIFO and to be received by the first control signal terminal of the corresponding data synchronization unit FIFO. In some embodiments, the external clock signal OSC_CLK may be a crystal oscillator signal provided by a crystal oscillator.

In order to ensure that the write clock signals W_CLK of the data synchronization units FIFO are synchronous, in the embodiment of the present disclosure, the external clock signal OSC_CLK are used as the write clock signals W_CLK of all the data synchronization units FIFO when the integrated circuits (IC) are just powered up, and when the clock signals PHY_CLK of all the port physical layers PHY are stable, the clock signals PHY_CLK of the port physical layers PHY are used as the write clock signals W_CLK of all the data synchronization units FIFO. Therefore, when the clock signals PHY_CLK are unstable in the earlier stage or due to an accident, it can be ensured through the external clock signal OSC_CLK that all the data synchronization units FIFO are in the same stable state (similar to a reset state), and all the data synchronization units FIFO are switched back to the normal operating state after all the port physical layers PHY are stable, thereby ensuring the data synchronization.

The determining unit 201 determines, according to the second input signal, whether the clock signals PHY_CLK corresponding to all the port physical layers PHY are in an unlocked state. The data can be normally transmitted only when all the clock signals PHY_CLK are in a locked state, which indicates that all the clock signals PHY_CLK are in an operating state, and all the port physical layers PHY reach a stable state. When the clock signals PHY_CLK are used as the write clock signals W_CLK, all the data synchronization units FIFO may transmit the data according to their respective clock signals PHY_CLK. When any one clock signal PHY_CLK is in the unlocked state, which indicates that the clock signal PHY_CLK is in the non-operating state, the corresponding port physical layer PHY is not stable and cannot normally transmit the data. When the clock signal PHY_CLK is used as the write clock signal W_CLK, the data synchronization unit FIFO cannot transmit the data under the corresponding the write clock signal W_CLK. In order to ensure that all the data synchronization units FIFO can transmit the data, all the data synchronization units FIFO use the external clock signal OSC_CLK as the write clock signals W_CLK.

Whether the clock signal PHY_CLK is in an unlocked state or not may be determined through a state of the lock signal Lock corresponding to the clock signal PHY_CLK. When the lock signal Lock is in an operating state, it indicates that the clock signal PHY_CLK is in a locked state, that is, the port physical layer PHY is stable. When the lock signal Lock is in a non-operating state, it indicates that the clock signal PHY_CLK is in an unlocked state, i.e., the port physical layer PHY is not stable. The second input signal is a state of the lock signals Lock corresponding to all the clock signals PHY_CLK. Specifically, in some embodiments, the second input signal may be a signal output by passing all the clock signals PHY_CLK through the AND gate, the signal output by the AND gate outputs an operating level only when all the clock signals PHY_CLK are in an operating state, and the first control unit 202 selects a corresponding signal as the write clock signal W_CLK according to a result of the AND gate. In some embodiments, the operating state of the lock signals Lock may be further determined through the state of the lock signals Lock corresponding to all the clock signals PHY_CLK according to a detection signal input by an external device. The second input signal may be the detection signal of the external device. When the detection signal detects an abnormality, which indicates that the corresponding lock signal Lock is in a non-operating state, the corresponding port physical layer PHY is unstable. The determining unit 201 determines whether each port physical layer PHY is stable according to the detection signal, and the first control unit 202 selects a corresponding signal as the write clock signal W_CLK according to the detection signal. Alternatively, the second input signal may be in other forms, which is not limited in the present disclosure as long as the operating state of the clock signal PHY_CLK may be determined.

In some embodiments, the first control unit 202 is a selector, and the external clock signal and the clock signal of the port physical layer PHY are used as inputs of the selector, and an output of the selector is controlled according to a result of the determining unit 201.

In some embodiments, the first controller 202 may have any other structure, which is not limited in the present disclosure.

In the embodiment of the present disclosure, the write clock signal W_CLK is derived from two signals, one being the clock signal PHY_CLK corresponding to the port physical layer PHY and the other being the external clock signal OSC_CLK from the outside. When the integrated circuit IC is just powered up or the clock signal PHY_CLK is not stable, the write clock signals W_CLK of all the data synchronization units FIFO use the external clock signal OSC_CLK, and after all the clock signals PHY_CLK are stable, the write clock signals W_CLK use the clock signals PHY_CLK corresponding to the port physical layers PHY. In this way, when the clock signals PHY_CLK are unstable, it can be ensured through the external clock signal OSC_CLK that all the data synchronization units FIFO are in the same stable state (similar to the reset state), and all the data synchronization units FIFO are switched back to the normal operating state after all the port physical layers PHY are stable, thereby ensuring the data synchronization.

FIG. 6 is a partial schematic diagram of an interface circuit according to an embodiment of the present disclosure. As shown in FIG. 6, the first control unit 202 is a selector MUX as an example. An input terminal of the selector MUX receives the clock signal PHY_CLK output from the port physical layer PHY and the external clock signal OSC_CLK input from the outside, one of which is output as the write clock signal W_CLK for the data synchronization unit FIFO according to the determining unit 201 (not shown).

In some embodiments, the control module 20 includes not only the first control units 202, but also a plurality of second control units in one-to-one correspondence with the port physical layers, and the control signals further include a plurality of second control signals in one-to-one correspondence with the plurality of second control units, where the second control signals are read clock signals R_CLK. Each second control unit includes a ninth input terminal configured to receive the external clock signal OSC_CLK and a tenth input terminal configured to receive any one of the plurality of clock signals PHY_CLK corresponding to the plurality of port physical layers.

The second control unit is configured to select the external clock OSC_CLK received from the ninth input terminal from the external clock signal OSC_CLK and any one of the clock signals PHY_CLK received from the tenth input terminal as the read clock signal R_CLK when any one of all the clock signals PHY_CLK is in an unlocked state.

In some embodiments, the second control unit is a selector.

In particular, the clock signal of each data synchronization unit FIFO includes the write clock signal W_CLK and the read clock signal R_CLK. The read clock signal R_CLK is similar to the write clock signal W_CLK. The read clock signal R_CLK is also derived from two signals, one being the clock signal PHY_CLK corresponding to the port physical layer PHY and the other being the external clock signal OSC_CLK from the outside. In the related art, when the port physical layer PHY is not yet stable, for example, when the integrated circuit IC is just powered up, the read clock signal R_CLK of the data synchronization unit FIFO is the external clock signal OSC_CLK. When the port physical layer PHY is stable, the read clock signal R_CLK of the data synchronization unit FIFO is the clock signal PHY_CLK. The read clock signal R_CLK is used for controlling other modules to read data in the data synchronization unit FIFO, and a difference between the read clock signal R_CLK and the write clock signal W_CLK is: the read clock signals R_CLK of all the data synchronization units FIFO are the same signal, and even if the clock signals PHY_CLK are stable, the read clock signals R_CLK of all the data synchronization units FIFO are the same the clock signal PHY_CLK. The time when the clock signals PHY_CLK are stable is different, so that the time when the input data in the data synchronization units FIFO is read is different, and therefore, the reading of the data is asynchronous. In order to ensure that the write clock signals W_CLK of all the data synchronization units FIFO are synchronous in the embodiment of the present disclosure, the write clock signals W_CLK of all the data synchronization units FIFO are selected as the clock signal PHY_CLK only when all the port physical layers PHY are stable, and otherwise, the write clock signals W_CLK are selected as the external clock signal OSC_CLK. Therefore, when the port physical layers PHY are unstable, it can be ensured through the external clock signal OSC_CLK that all the data synchronization units FIFO are in the same stable state (similar to a reset state), and all the data synchronization units FIFO are switched back to the normal operating state after all the port physical layers PHY are stable, thereby ensuring the data synchronization.

In some embodiments, after all the clock signals PHY_CLKs are stable, the read clock signals R_CLK of all the data synchronization units FIFO may be any one of the plurality of the clock signals PHY_CLK corresponding to the plurality of port physical layers PHY, which is not limited in the present disclosure.

In some embodiments, the second control unit is a selector.

Other details of the read clock signal R_CLK are similar to those of the write clock signal W_CLK, and are not repeated here.

FIG. 7 is a schematic diagram of another interface circuit according to an embodiment of the present disclosure. As shown in FIG. 7, as an example, each of the first control unit and the second control unit is a selector MUX. Input terminals of the selector MUX corresponding to the first control unit receive the clock signal PHY_CLK output by the port physical layer PHY and the external clock signal OSC_CLK from the outside, one of which is output as the write clock signal W_CLK for the data synchronization unit FIFO according to the determining unit 201 (not shown). Input terminals of the selector MUX corresponding to the second control unit receive a signal Lane1_PHY_CLK output by the port physical layer PHY_1 and the external clock signal OSC_CLK from the outside, one of which is output as the read clock signal R_CLK for the data synchronization unit FIFO according to the determining unit 201 (not shown).

In some embodiments, the first input signal received by the first input terminal of each port physical layer is an input signal through one lane (a 1lane input signal).

Specifically, the port physical layer parses the input signal to obtain an input data through one lane (a 1lane input data). Each port physical layer PHY corresponds to one input signal, and the data transmission through multiple lanes may be realized by combining the plurality of port physical layers PHY, so that the port physical layers PHY are more flexible.

In some embodiments, the first input signal received by the first input terminal of each port physical layer includes input signals through multiple lanes.

Specifically, in any one of the above embodiments, a small IP may be designed in a free splicing manner where each port physical layer PHY corresponds to the first input signal through one lane (1lane), and alternatively, a greater IP may be designed where each port physical layer PHY corresponds to the first input signals through two lanes (2lane) or through three lanes (3lane) or through four lanes (4lane) or through even more lanes. With such the IP with each port physical layer PHY corresponding to the first input signals through two lanes (2lane), an integrated circuit IC including even-numbered lanes, such as 4lane, 6lane, or 8lane or the like, may be obtained by splicing a plurality of the port physical layers PHY together. Alternatively, with such the IP with one port physical layer PHY corresponding to the 1lane and each of other port physical layers PHY corresponding to the 2lane, an integrated circuit IC including odd-numbered lanes, such as 3lane, 5lane, or 7lane or the like, may be obtained by splicing the plurality of the port physical layers PHY together, which is not limited by the present disclosure. It should be noted that multiple lanes corresponding to each port physical layer PHY share the same signal in the above embodiments, such as the same lock signal Lock, the same clock signal PHY_CLK, the same signal Lane_en, or the same reset signal reset, or the like.

In some embodiments, the interface circuit may include not only the data transmission module 10, the control module 20, the data synchronization module 30, the reconfiguration module 40 and the lock control module 50, but also a parsing module 60 connected to the data synchronization module 30 and including a plurality of parsing units Link in one-to-one correspondence with the port physical layers PHY, and each data synchronization unit FIFO corresponds to one parsing unit Link, which is configured to receive and parse the input data transmitted by the data synchronization unit FIFO.

Specifically, FIG. 10 is a schematic diagram of another interface circuit according to an embodiment of the present disclosure. As shown in FIG. 10, the plurality of parsing units Link and the plurality of data synchronization units FIFO are in one-to-one correspondence with each other, and each parsing unit Link is configured to receive the input data Data, and the lock signal Lock transmitted by the corresponding data synchronization unit FIFO and a clock required by the parsing unit Link. It should be noted that all the parsing units Link receive the same clock signal PHY_CLK as the clock of each parsing unit Link. In FIG. 10, the clock is the clock signal PHY_1_CLK as an example. Alternatively, the clock may be any one of the clock signals PHY_CLK corresponding to all the port physical layers PHY, as long as it is ensured that all the parsing units Link uses the same clock signal PHY_CLK. The input data is parsed according to the clock of the parsing unit Link and the lock signal Lock for subsequent use.

In the interface circuit provided in the embodiment of the present disclosure, the control signal is generated according to the second input control signal related to the lock signals Lock corresponding to all the port physical layers PHY in the integrated circuit, so as to control the resetting of the data synchronization unit FIFO or the read clock and the write clock (the read clock signal R_CLK, the write clock signal W_CLK) of the data synchronization unit FIFO, thereby ensuring the synchronous transmission of the input data corresponding to the port physical layers PHY.

On one hand, the lock signals output by all the port physical layers PHY pass through the one AND gate and are used as the reset signal of the data synchronization units FIFO, through which the reset function of all the data synchronization units FIFO are controlled. In this way, from the functional perspective, after a lock process for all the port physical layers PHY is successful, the data synchronization units FIFO start to operate, and therefore the read clocks or the write clocks are the same, the problem of different clocks cannot appear, and the problem of the asynchronous data transmission cannot appear. Furthermore, in order to ensure that the lock signals Lock corresponding to the port physical layers PHY are synchronous, the reconfiguration module is designed. When the lock signal Lock_x is at a non-operating level, the control signal is also at a non-operating level, and a pulse Lane_en at a non-operating level is generated by the reconfiguration module, and reconfigures all the port physical layers PHY, so that all the port physical layers PHY are subjected to the lock process again at the same time. Thus, the situation, that the starting time when different port physical layers PHY are subjected to the lock process again are different, is avoided, the mutual waiting process among the different port physical layers PHY does not occur, and a relock process of all the lanes can be completed quickly without the abnormal display. Furthermore, for the plurality of integrated circuits integrated together, the dual-lock architecture is provided with the lock control module configured to connect all the integrated circuits IC to each other. Once any integrated circuit IC needs a training process again (a retraining process), other integrated circuits IC are firstly changed into a non-operating level through the reconfiguration module (Lane en Ctrl) 40 and then changed into an operating level, and all the lanes of all the integrated circuits IC are simultaneously subjected to the retraining process, so that the mutual waiting process among the integrated circuits IC can be avoided in the retraining process.

On the other hand, the data synchronization unit FIFO includes the write clock signal W_CLK and the read clock signal R_CLK, and the write clock signal W_CLK is derived from two signals, one being the clock signal PHY_CLK of the port physical layer PHY and the other being the external clock signal OSC_CLK from the outside. When the integrated circuit IC is just powered up, the write clock signals W_CLK of all the data synchronization units FIFO use the external clock signal OSC_CLK, and after the clocks of all the port physical layers PHY are stable, the write clock signals W_CLK use the clock signals PHY_CLK of the port physical layers PHY. The read clock signal R_CLK is also derived from two signals, one being a signal Lane1_PHY_CLK recovered from the port physical layer PHY_1 and the other being the external clock signal OSC_CLK from the outside. When the integrated circuit IC is just powered up, the read clock signal R_CLK uses the external clock signal OSC_CLK, and after the clocks of all the port physical layers PHY are stable, the read clock signal R_CLK uses the signal Lane1_PHY_CLK. In this way, when the port physical layers PHY are unstable, it can be ensured through the external clock signal OSC_CLK that all the data synchronization units FIFO are in the same stable state (similar to the reset state), and all the data synchronization units FIFO are switched back to the normal operating state after all the port physical layers PHY are stable, thereby ensuring the data synchronization.

Through the interface circuit provided by the embodiment of the present disclosure, the data synchronization and the relock synchronization are realized, and the normal display picture in the display panel is ensured.

The embodiment of the present disclosure further provides a data transmission method for the interface circuit in any one of the above embodiments, including: parsing, by each port physical layer in the data transmission module, a received first input signal to obtain input data, the clock signal and the lock signal corresponding to the port physical layer; generating, by the control module, the control signal according to the second input signal, wherein the second input signal is related to the plurality of lock signals of the plurality of port physical layers; and synchronously transmitting, by the plurality of data synchronization units in the data synchronization module, the input data corresponding to the plurality of data synchronization units when the lock signals corresponding to all the port physical layers are at an operating level.

In some embodiments, the control module is an AND gate, and the generating, by the control module, the control signal according to the second input signal includes: receiving the plurality of lock signals corresponding to the plurality of port physical layers, and generating, by the AND gate, the control signal.

In some embodiments, when the lock signals corresponding to all the port physical layers are at the operating level, synchronously transmitting, by the plurality of data synchronization units in the data synchronization module, the input data corresponding to the plurality of data synchronization units based on the control signal, includes: taking the control signal as a reset signal of the plurality of data synchronization units of the data synchronization module; and synchronously transmitting, by the plurality of data synchronization units, the input data corresponding to the plurality of data synchronization units based on the reset signal when the lock signals corresponding to all the port physical layers are at the operating level.

In some embodiments, the method further includes: reconfiguring the plurality of port physical layers based on the control signals.

In some embodiments, the control signal includes a write clock signal, and the generating, by the control module, the control signal according to the second input signal, includes: determining, by the control module, whether the plurality of clock signals corresponding to the plurality of port physical layers are in an unlocked state or not according to the second input signal; and selecting, by the control module, an external clock signal from the external clock signal and any one of all the clock signals as the write clock signal when the clock signal is in the unlocked state.

In some embodiments, the control signal further includes a read clock signal, and the generating, by the control module, the control signal according to the second input signal, includes: selecting an external read clock signal from the external read clock signal and any one of all the clock signals as the read clock signal when any one clock signal is in the unlocked state.

For details of the data transmission method provided in the present disclosure, reference is made to any embodiment of the interface circuit, and details are not repeated here.

The embodiment of the present disclosure further provides a display panel, including the interface circuit in any one of the above embodiments.

The embodiment of the present disclosure further provides a display apparatus, including the display panel in any one of the above embodiments.

It should be understood that the above embodiments are merely exemplary embodiments adopted to explain the principles of the present disclosure, and the present disclosure is not limited thereto. It will be apparent to one of ordinary skill in the art that various changes and modifications may be made therein without departing from the spirit and scope of the present disclosure, and such changes and modifications also fall within the scope of the present disclosure.

## Claims

1. An interface circuit for an integrated circuit, comprising:
a data transmission module comprising a plurality of port physical layers; wherein each port physical layer is configured to parse a first input signal from a first input terminal to obtain input data to a data output terminal and a clock signal to a clock signal terminal, each port physical layer further comprises a lock signal terminal configured to output a lock signal, and the lock signal at the lock signal terminal of the port physical layer is changed from a non-operating level to an operating level in response to the lock signal at the lock signal terminal detecting that the clock signal is in a locked state;
a control module configured to obtain a control signal at a second output terminal of the control module according to a second input signal input by a second input terminal of the control module; wherein the second input signal is related to a plurality of lock signals at a plurality of lock signal terminals of the plurality of port physical layers; and
a data synchronization module comprising a plurality of data synchronization units in one-to-one correspondence with the plurality of port physical layers, wherein each data synchronization unit corresponds to one control signal terminal, a third input terminal of each data synchronization unit is configured to receive the input data of the port physical layer corresponding to the data synchronization unit, an eighth input terminal of the data synchronization unit is configured to receive the lock signal, a control signal terminal of the data synchronization unit is configured to receive the control signal, and a fourth input terminal of the data synchronization unit is configured to receive the clock signal of the port physical layer corresponding to the data synchronization unit or a reset signal based on the control signal; the plurality of data synchronization units are configured to synchronously transmit the corresponding input data based on the control signal in response to the plurality of lock signals corresponding to all the port physical layers being at the operating level.

2. The interface circuit according to claim 1, wherein the second input signal comprises the plurality of lock signals of the plurality of port physical layers, the control signal is the reset signal, and the reset signal output by the second output terminal of the control module is at an operating level in response to the plurality of lock signals being at the operating level.

3. The interface circuit according to claim 2, wherein the control module is an AND gate.

4. The interface circuit according to claim 1, wherein the control module comprises a determining unit and a plurality of first control units in one-to-one correspondence with the plurality of port physical layers, the control signal comprises a plurality of first control signals in one-to-one correspondence with the plurality of first control units, and the plurality of first control signals are write clock signals of the plurality of data synchronization units; and each first control unit comprises a fifth input terminal configured to receive an external clock signal and a sixth input terminal configured to receive the clock signal output by the port physical layer corresponding to the first control unit;
the determining unit is configured to determine whether the plurality of clock signals corresponding to the plurality of port physical layers are in an unlocked state based on the second input signal; and
in response to any one clock signal of the plurality of clock signals being in the unlocked state, a corresponding first control unit is configured to select, among the external clock signal received from its fifth input terminal and the any one clock signal received from its sixth input terminal, the external clock signal as the write clock signal.

5. The interface circuit according to claim 4, wherein the control module further comprises a plurality of second control units in one-to-one correspondence with the plurality of port physical layers, the control signal further comprises a plurality of second control signals in one-to-one correspondence with the plurality of second control units, and the plurality of second control signals are read clock signals; and each second control unit comprises a ninth input terminal configured to receive an external read clock signal and a tenth input terminal configured to receive any one of the plurality of read clock signals corresponding to the plurality of port physical layers; and
in response to any one clock signal of the plurality of clock signals being in the unlocked state, a corresponding second control unit is configured to select, among the external read clock signal received from the ninth input terminal and the any one clock signal received from the tenth input terminal, the external read clock signal as the read clock signal.

6. The interface circuit according to claim 5, wherein the plurality of first control units and the plurality of second control units are selectors.

7. The interface circuit according to claim 2, wherein each port physical layer further comprises a reconfiguration signal terminal, the interface circuit further comprises a reconfiguration module, a seventh input terminal of the reconfiguration module is connected to the second output terminal of the control module, and a third output terminal of the reconfiguration module is connected to the reconfiguration signal terminals of all the plurality of port physical layers.

8. The interface circuit according to claim 7, wherein a plurality of integrated circuits are cascaded, each integrated circuit corresponds to one control signal, the interface circuit further comprises a lock control module, a first terminal of the lock control module is connected to the plurality of integrated circuits and configured to receive the control signal corresponding to each integrated circuit, a second terminal of the lock control module is connected to the seventh input terminal of the reconfiguration module and configured to transmit the control signal corresponding to each integrated circuit to the reconfiguration module, and the third output terminal of the reconfiguration module is connected to a third terminal of the lock control module, which is configured to receive the reconfiguration signal output by the reconfiguration module and transmit the reconfiguration signal to each integrated circuit through the first terminal of the lock control module.

9. The interface circuit according to any one of claims 1 to 8, wherein the first input signal received by the first input terminal of each port physical layer is an input signal through one lane.

10. The interface circuit according to any one of claims 1 to 8, wherein the first input signal received by the first input terminal of each port physical layer comprises input signals through multiple lanes.

11. The interface circuit according to claim 1, wherein the interface circuit further comprises a parsing module connected to the data synchronization module and comprising a plurality of parsing units in one-to-one correspondence with the plurality of port physical layers, and each data synchronization unit corresponds to one parsing unit, which is configured to receive and parse the input data transmitted by the data synchronization unit.

12. A data transmission method applied to the interface circuit according to any one of claims 1 to 11, comprising:
parsing, by each port physical layer in the data transmission module, a received first input signal to obtain input data, the clock signal and the lock signal corresponding to the port physical layer;
generating, by the control module, the control signal according to the second input signal, wherein the second input signal is related to the plurality of lock signals of the plurality of port physical layers; and
synchronously transmitting, by the plurality of data synchronization units in the data synchronization module, the input data corresponding to the plurality of data synchronization units based on the control signal in response to each of the plurality of lock signals corresponding to all the plurality of port physical layers being at an operating level.

13. The method according to claim 12, wherein the control module is an AND gate, and the generating, by the control module, the control signal according to the second input signal comprises:
receiving the plurality of lock signals corresponding to the plurality of port physical layers, and generating, by the AND gate, the control signal.

14. The method according to claim 13, wherein the synchronously transmitting, by the plurality of data synchronization units in the data synchronization module, the input data corresponding to the plurality of data synchronization units based on the control signal in response to each of the plurality of lock signals corresponding to all the plurality of port physical layers being at an operating level, comprises:
taking the control signal as a reset signal of the plurality of data synchronization units of the data synchronization module; and
synchronously transmitting, by the plurality of data synchronization units, the input data corresponding to the plurality of data synchronization units based on the reset signal in response to each of the plurality of lock signals corresponding to all the port physical layers being at the operating level.

15. The method according to claim 14, further comprising: reconfiguring the plurality of port physical layers based on the control signal.

16. The method according to claim 12, wherein the control signal comprises a write clock signal, and the generating, by the control module, the control signal according to the second input signal, comprises:
determining, by the control module, whether the plurality of clock signals corresponding to the plurality of port physical layers are in an unlocked state or not according to the second input signal; and
selecting, by the control module, an external clock signal from the external clock signal and any one clock signal of all the plurality of clock signals as the write clock signal in response to the any one clock signal being in the unlocked state.

17. The method according to claim 16, wherein the control signal further comprises a read clock signal, and the generating, by the control module, the control signal according to the second input signal, comprises:
selecting an external read clock signal from the external read clock signal and any one clock signal of all the plurality of clock signals as the read clock signal in response to the any one clock signal being in the unlocked state.

18. A display panel, comprising the interface circuit according to any one of claims 1 to 11.

19. A display apparatus, comprising the display panel according to claim 18.
